# EUROPEAN PATENT APPLICATION

(11) **EP 2 905 199 A1**
(43) Date of publication of application: **12.08.2015**
(21) Application number: 15154193.5
(22) Date of filing: 06.02.2015
(51) Int. Cl.: B62D 1/10, F16D 3/06

(54) **Coupling**

(30) Priority: 06.02.2014 GB 201402020
(71) Applicant: S.P.A. Automotive Limited, Staffordshire WS14 9PN (GB)
(72) Inventor: Barnes, Richard, Packington, Staffordshire WS14 9PN (GB); Hawkins, Steven, Packington, Staffordshire WS14 9PN (GB)
(74) Representative: Moore, Christopher Mark

(57) **Abstract**

A releasable coupling (1) comprising a hub (3) and a shaft (5), the shaft (5) being received or receivable in the hub (3), one of the hub (3) and shaft (5) having first (54) and second (55) splines, the other of the shaft (5) and the hub (3) having corresponding first (35) and second (36) rebates in which the first and second splines (54, 55) are received or are receivable, the first spline (54) extending to or substantially to a distal end of the said one of the hub (3) and shaft (5) and beyond the second spline (55).

## Description

This invention relates generally to a coupling for connecting two rotating members or shafts together. More specifically, although not exclusively, this invention relates to a quick release coupling configured to enable simple and effective releasable engagement between two components.

Quick release couplings are well known for a multitude of fields and in a multitude of applications. One exemplary application is in steering wheels, which can be mounted on a detachable hub for quick detachment of the steering wheel from the steering column of a vehicle. This arrangement is common in motorsport for narrow-spaced cockpits in order to facilitate the driver climbing in and out. This feature is also used in some vehicles as an anti-theft device.

This invention is particularly, although not exclusively, directed to releasable couplings for connecting steering wheels to steering columns, but the skilled addressee will appreciate a multitude of other potential applications for the invention.

Detachable steering wheel arrangements generally include a splined shaft connected to the steering column, which mates with a splined hub connected to the steering wheel. In use, the steering wheel can be positioned so that the hub is aligned with the shaft and pushed over it with the splines of the parts in alignment. The assembly also normally includes a positive lock, for example a ball/detent locking arrangement, which is often actuated by a sleeve.

Known detachable steering wheel arrangements, and indeed other detachable coupling mechanisms, can be improved to facilitate rapid and easy alignment and connection.

It is therefore a first non-exclusive object of the invention to provide a releasable coupling arrangement which facilitates rapid and easy alignment and connection. It is a further non-exclusive object of the invention to provide a releasable coupling arrangement in which engaging features of the components are protected against damage.

Accordingly, a first aspect of the invention provides a releasable coupling comprising a hub having a proximal end for attachment to or attached to a site of use and a distal end and a shaft having a proximal end for attachment to or attached to a site of use and a distal end, the shaft being received or receivable in the hub, one of the hub and shaft having first and second splines, the other of the shaft and the hub having corresponding first and second rebates in which the first and second splines are received or are receivable, the first spline extending to or substantially to a distal end of the said one of the hub and shaft and beyond the second spline.

Advantageously, the first spline of the hub or of the shaft comprises a lead-in portion extending beyond, e.g. axially beyond or further than, the second spline thereof.

A further aspect of the invention provides a releasable coupling comprising a hub and a shaft, the hub and shaft both comprising distal and proximal ends, the hub comprising first and second splines for engagement with respective first and second splines of or associated with the shaft, the first spline of the wherein the size and/or configuration of the first spline of at least one of the hub and shaft is different to that of the second spline thereof and said lead-in portion extending to the distal end of the hub and/or the proximal end of the shaft.

The use of splines with different sizes and/or configurations provides a location means for ensuring a pre-determined orientation of the hub relative to the shaft. One of the shaft and hub may have respectively an outer or inner circumferential perimeter, and the first spline, in said circumferential direction, may be larger than the second spline.

For the avoidance of doubt, the term spline as used herein should be construed broadly. The term may, for example, refer to a projection or key and/or it may refer to a groove or slot or keyway for cooperation with such a projection or key.

Preferably, the size and/or configuration of the first spline of the hub is different to that of the second spline thereof and/or the size and/or configuration of the first spline of the shaft is different to that of the second spline thereof. Additionally or alternatively, the size and/or configuration of the first spline pair may be different to that of the second spline pair.

Preferably, the or each of the hub and/or shaft comprises two or more, for example three or more, e.g. a plurality of, second splines or spline pairs. Additionally or alternatively, the or each of the hub and/or shaft may further comprise a third spline, which may comprise the same or substantially the same or a similar or different size and/or configuration than the first and/or second spline or spline pair.

In one preferred embodiment, one of the hub and shaft comprises a first spline and a plurality of second splines, e.g. wherein each of the second splines comprise the same or substantially the same or a similar size and/or configuration, and the other of said shaft and hub comprises a plurality of second rebates. The shaft may comprise or also comprise a first spline and a plurality of second splines, e.g. wherein each of the second splines comprise the same or substantially the same or a similar size and/or configuration. The first spline of the hub may be configured for engagement with the first spline of the shaft and/or each of the second splines of the hub may be configured for engagement with a respective one of the second splines of the shaft.

The first spline of the shaft and/or the first spline of the hub is preferably larger, e.g. deeper and/or thicker and/or wider, for example in cross-section, than the second spline or splines thereof. Alternatively, the first spline of the shaft and/or the first spline of the hub may be smaller, e.g. thinner and/or shallower and/or narrower, for example in cross-section, than the second spline or splines thereof.

A second aspect of the invention provides a releasable coupling comprising a hub and a shaft, the hub comprising first and second splines for engagement with respective first and second splines of or associated with the shaft, wherein the first spline of the hub or of the shaft comprises a lead-in portion extending beyond, e.g. axially beyond or further than, the second spline thereof.

The lead-in portion may be configured such that when the shaft is inserted into the hub the lead-in portion of the first shaft spline is received within the hub prior to the second shaft spline.

A third aspect of the invention provides a releasable coupling comprising a hub and a shaft, the hub comprising first and second splines for engagement with respective first and second splines of or associated with the shaft, wherein the first shaft spline comprises a lead-in portion configured such that when the shaft is inserted into the hub the lead-in portion of the first shaft spline is received within the hub prior to the second shaft spline.

The lead-in portion may be configured such that when the shaft is inserted into the hub one of the splines of the hub contacts the lead-in portion prior to contacting the second shaft spline thereof.

A fourth aspect of the invention provides a releasable coupling comprising a hub and a shaft, the hub comprising first and second splines for engagement with respective first and second splines of or associated with the shaft, wherein the first spline of the shaft comprises a lead-in portion extending to or towards a distal end of the shaft and configured such that when the shaft is inserted into the hub one of the splines of the hub contacts the lead-in portion prior to contacting the second shaft spline thereof.

A fifth aspect of the invention provides a releasable coupling comprising a hub and a shaft, the hub comprising first and second splines for engagement with respective first and second splines of or associated with the shaft, wherein the first spline of the hub comprises a lead-in portion configured such that when the shaft is inserted into the hub one of the splines of the shaft contacts the lead-in portion prior to contacting the second shaft spline thereof.

The provision of a lead-in portion ensures that one of the splines engages before the other(s). This facilitates a smooth insertion of the shaft into the hub and reduces the likelihood of damage to the other spline(s).

For the avoidance of doubt, any of the features described herein apply equally to any aspect of the invention.

At least one, preferably both, of the first and second splines of the shaft may comprise a key and/or at least one, preferably both, of the first and second splines of the hub may comprise a keyway. Alternatively, at least one, e.g. both, of the first and second splines of the shaft may comprise a keyway and/or at least one, e.g. both, of the first and second splines of the hub may comprises a key. The splines of the shaft may be included on an external, e.g. circumferential, surface thereof and/or the splines of the hub may be included on an internal, e.g. circumferential, surface thereof.

Preferably, each of the hub and shaft comprise a plurality of interengaging splines or keys, for example projecting splines or keys, e.g. wherein the spaces between adjacent splines or keys receive, or provide keyways or rebates for the splines of the other of the hub and shaft.

One or more of the first and/or second splines may comprise a lead-in taper, for example to facilitate engagement. Preferably, the lead-in taper of the first spline, or of the lead-in portion of the first spline, is more gradual or less acute than the lead-in taper of the second spline or splines. In some embodiments, the lead-in taper of the first spline, or of the lead-in portion of the first spline, is between 5° and 60°, for example between 10° and 50°, e.g. between 20° and 40°, preferably between 25° and 35°, more preferably between 30° and 32°, such as approximately 31°.

Additionally or alternatively, the lead-in taper of the second spline may be between 10° and 80°, for example between 20° and 70°, e.g. between 30° and 60°, preferably between 40° and 50°, more preferably between 44° and 46°, such as approximately 45°.

The hub may comprise a lead-in or lead-in portion or sleeve, which may be free of splines and/or rebates and/or comprise a substantially cylindrical surface that may be smooth. The lead-in or lead-in portion or sleeve may be configured to guide the shaft, for example prior to engagement of the first and/or second splines or spline pairs.

The coupling may further comprise a lock or lock means, for example a releasable lock or lock means. The lock or lock means may comprise an interference fit and/or snap fit arrangement. Additionally or alternatively, the lock or lock means may comprise a projection that is at least partially receivable, e.g. releasably receivable, in or by and/or engageable, e.g. releasably engageable, with a recess or depression or detent. Additionally or alternatively, the lock or lock means may comprise a sleeve extending around the shaft and hub when said shaft has been received in said hub.

The projection may be biased toward a deployed or projecting or projected or engaging or engaged position or condition, for example such that when the projection is aligned with the recess or depression or detent it is at least partially biased therein and/or into engagement therewith. Alternatively, the projection may be biased toward a retracted position or condition. In some embodiments, the projection comprises a ball, for example a biased or resiliently biased or sprung ball, e.g. that is retained within one of the hub or shaft.

In some embodiments, the hub comprises the projection or ball and/or the shaft comprises the recess or depression or detent. In an alternative embodiment, the shaft comprises the projection or ball and/or the hub comprises the recess or depression or detent.

Preferably, the coupling further comprises a lock sleeve that is movable or translatable along the coupling or hub or shaft and/or that surrounds or receives at least a portion of the coupling or hub or shaft. The lock sleeve is preferably operable or movable or translatable between a first position or condition, for example in which the shaft may be removed from the hub and/or in which the projection or ball is in, or able to be urged to, a retracted position or condition, and a second position or condition, for example in which the shaft is inhibited or prevented from being removed from the hub and/or in which the projection or ball is deployed.

In some embodiments, the lock sleeve comprises the projection or ball or actuates or operates or biases the projection or ball, e.g. to or toward the deployed or projecting or projected or engaging or engaged position or condition. In other embodiments, the lock sleeve comprises the recess or depression or detent.

Further aspects of the invention provide a shaft as described above and/or a hub as described above, e.g. for use in a releasable coupling as described above. The hub may further comprise the lock sleeve and/or the ball.

A further aspect of the invention provides a quick release or detachment mechanism, e.g. for a steering wheel, the mechanism comprising a releasable coupling as described above.

A yet further aspect of the invention provides a steering wheel comprising a hub as described above or a shaft as described above.

A yet further aspect of the invention provides a steering column comprising a shaft as described above.

A yet further aspect of the invention provides a steering column or steering column shaft comprising a shaft as described above.

A yet further aspect of the invention provides a kit of parts for assembly into a coupling or quick release or detachment mechanism as described above. The kit may comprise a hub as describe above and/or a shaft as described above and/or a steering wheel and, preferably, locking means to releasably secure the hub to the shaft in use.

Embodiments of the invention will now be described by way of example only with reference to the accompanying drawings in which:

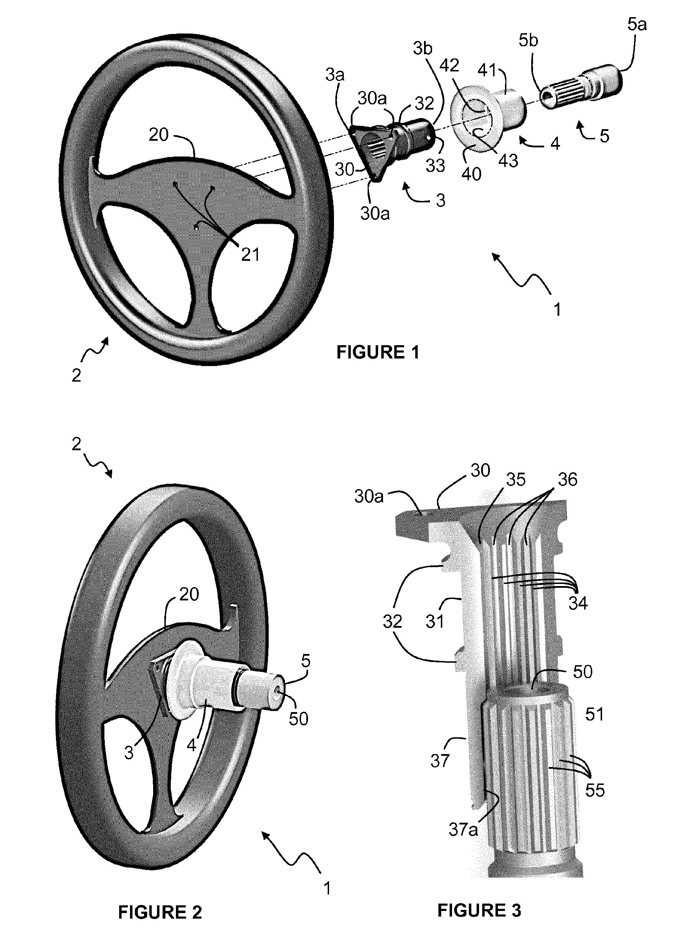

Figure 1 is an exploded front perspective view of a steering wheel and part steering column shaft incorporating a coupling according to one embodiment of the invention;
Figure 2 is a rear perspective view of the steering wheel and part steering column shaft of Figure 1 shown in an assembled condition;
Figure 3 is a perspective partial section view of the coupling of the assembly of Figures 1 and 2 illustrating the mating components of the hub and shaft;
Figure 4 is an enlarged view of the mating components shown in Figure 3;
Figure 5 is a perspective view of the part shaft of Figure 1 prior to cutting of the splines;
Figure 6 is an enlarged view of the first spline of the shaft of the assembly of Figures 1 to 4;

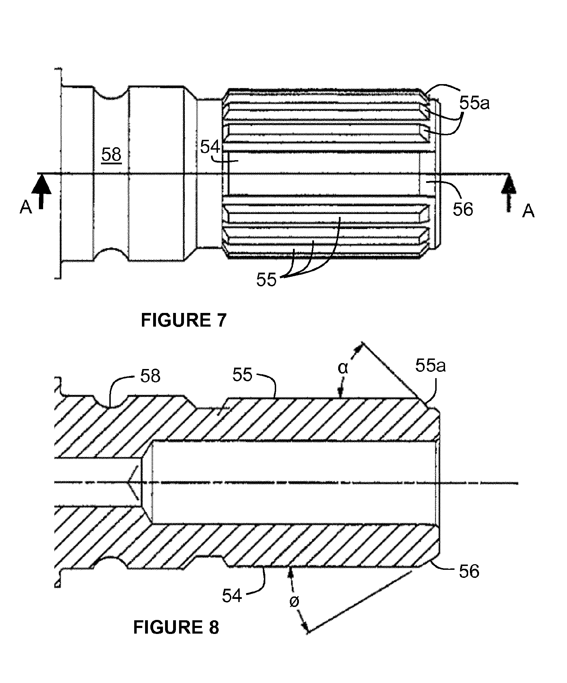

Figure 7 is a side view of the part shaft of Figure 1; and
Figure 8 is a section view along line A-A of Figure 7.

Referring now to the Figures, there is shown a steering wheel assembly 1 incorporating a releasable coupling according to one embodiment of the invention. The assembly 1 includes a steering wheel 2, a hub 3 for attachment to the steering wheel 2, a lock sleeve 4 and a shaft 5. The hub 3 having a proximal end 3a and a distal end 3b, the shaft 5 having a proximal end 5a and a distal end 5b. The steering wheel 2 is of a standard design and includes a wheel hub 20 with three fixing holes 21 for receiving fasteners (not shown).

The hub 3 includes a triangular mounting flange 30 at a first of its ends with mounting holes 30a adjacent each of the corners of the flange 30 for cooperation to the three fixing holes 21 of the wheel 2, wherein fasteners (not shown) engage the holes 21, 30a to secure the hub 3 to the wheel 2. The hub 3 also includes a tubular body 31 with a pair of ridges 32 on its outer circumferential surface, an axial hole 33 adjacent its second end and a plurality of splines 34, 35, 36 extending radially from the inner surface of the body 31. The splines 34, 35, 36 include a plurality of keys 34 with lead-in tapers 34a and define a first keyway 35 and a plurality of second keyways 36. The first keyway 35 is wider than the second keyways 36. The body 31 of the hub 3 also includes lead-in sleeve 37, which is free of splines and includes a smooth cylindrical internal surface 37a. The hub 3 includes a ball (not shown) captivated within the axial hole 33 by opposed lips (not shown).

The lock sleeve 4 includes an actuating flange 40 and a tubular body 41 with an inwardly extending radial ridge 42 on its internal circumferential surface 43. In an assembled condition, the lock sleeve 4 is mounted over the body 31 of the hub 3 and able to translate along it, but wherein such translation is limited by the ridges 32 of the body 31 of the hub 3. The assembly also includes a compression spring (not shown) captivated between the ridge 42 and the hub 3, which biases the lock sleeve 4 toward the second end of the hub 3.

At rest, the radial ridge 42 of the lock sleeve 4 urges the captivated ball (not shown) into a deployed position in which it projects from the internal surface 37a of the lead-in sleeve 37 of the hub 3. Actuation of the flange 40 of the lock sleeve 4 causes it to translate along the hub 3, bringing the ridge 42 out of alignment with the ball (not shown) and allowing the ball (not shown) to be urged into the axial hole 33.

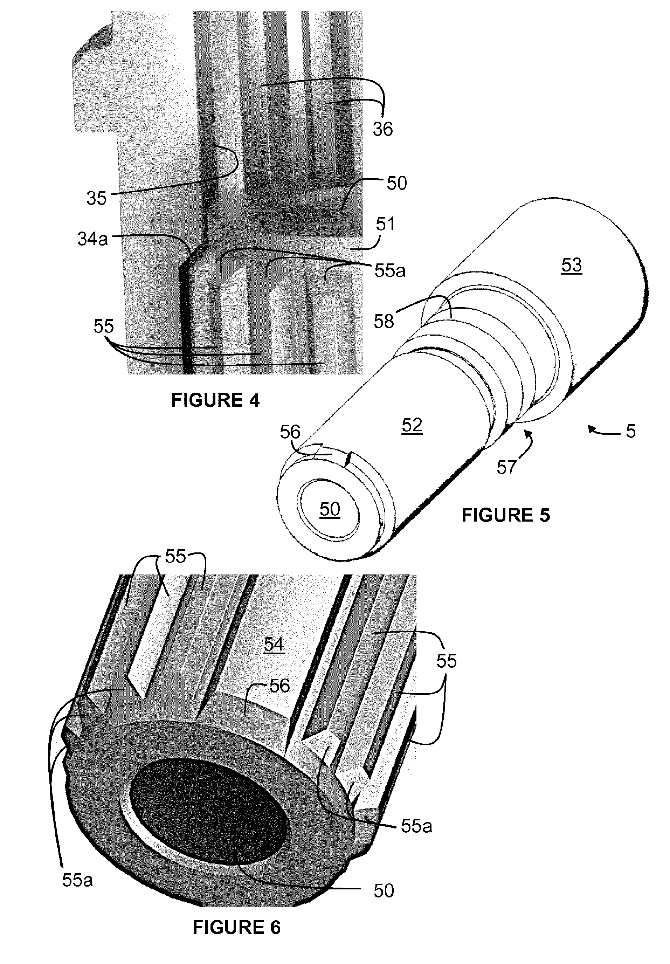

The part shaft 5 includes an axial hole 50, a base circumferential diameter 51, an intermediate diameter 52 and a shaft diameter 53, shown more clearly in Figure 5. Adjacent the free end of the part shaft 5 there are a plurality of splines 54, 55 projecting radially outwardly from the base diameter 51 and terminating at the intermediate diameter 52. The splines 54, 55 include a first spline or key 54 and a plurality of second splines or keys 55. The first spline or key 54 is wider than the second splines or keys 55 and includes a lead-in portion 56 with a taper beginning at the free end of the part shaft 5 and extending at a first lead-in angle ø, which is 31° in this embodiment. The second splines or keys 55 also include lead-in tapers 55a that begin downstream and spaced from the free end of the part shaft 5 and extend at a second lead-in angle α that is more acute than the first lead-in angle, namely 45° in this embodiment.

The part shaft 5 also includes a locking portion 57 downstream and spaced from the splines 54, 55. The circumferential surface of the locking portion 57 also corresponds to the intermediate diameter 52 and includes a locking groove 58 extending about its circumference for receiving the ball (not shown) captivated in the axial hole 33 of the hub 3 when it is in the deployed position.

In use, the flange 40 of the lock sleeve 4 is urged toward the steering wheel 2 to bring the ridge 42 out of alignment with the ball (not shown) and allow the ball (not shown) to move within the axial hole 33. With the lock sleeve 4 actuated, the hub 3 is placed over the part shaft 5 and pushed thereon such that the splines 54, 55 enter the lead-in portion 36 of the hub 3 until the lead-in portion 56 of the first spline 54 abuts lead-in tapers 34a of the second splines 34. The steering wheel 2 is then rotated while urging the hub 3 gently against the shaft 5 until the first spline 54 aligns with the first keyway 35.

At this point, the shaft 5 is inserted further into the hub 3 with the first spline 54 sliding within the first keyway 35 and the second splines 55 sliding within the second keyways 36 until the free end of the hub 3 comes into contact with the shaft diameter 53, thereby preventing any further movement. The lock sleeve 4 is then released, thereby urging the ball (not shown) into the deployed position and securing the steering wheel axially onto the shaft 5.

An alternative to tapering the first spline or key 54 in the manner shown in the Figures (and described above) is to gradually narrow the width of said first spline or key 54 in a circumferential direction, beginning downstream, such that the lead-in portion 56 is provided with a pointed, upstanding end. However, and although not excluded from the or scope of this invention, we believe that tapering the first spline or key 54 in the manner shown in the Figures is advantageous over this narrowing.

Firstly, during misaligned coupling or attempted coupling, where the lead-in portion 56 of the first spline or key 54 of the part shaft 5 contacts the lead-in taper 34a of splines 34 of the hub 3, the contact area will be greatly reduced for a narrowed rather than a tapered lead-in portion 56. As a consequence, for the same applied force, the pressure exerted on the end of the lead-in portion 56 (and to the part or parts of the end of the spline(s) 34 to which it contacts) will be substantially lower using a relatively broad rather than a relatively narrow lead-in portion 56. Therefore, the likelihood of fracture, distortion and/or other forms of damage to the splines 54, 34 is reduced by having a broad rather than a narrow leading spline.

Secondly, by maintaining the width of the lead-in portion 56 by tapering (as opposed to a pointed end to lead-in portion 56 as produced by narrowing) the likelihood of said lead-in portion 56 contacting multiple splines 34 during misaligned connection is increased. Advantageously, this makes it highly unlikely that during misaligned connection the lead-in portion 56 of the first spline or key 54 will become accidentally incorrectly engaged in keyways 35 between splines 34 of the hub 3. A pointed end to the lead-in portion 56 would greatly increase the likelihood of accidental incorrect engagement in keyways 35 between splines 34 of the hub 3, and could therefore lead to the part shaft 5 and hub 3 becoming wedged relative to each other in a misaligned position.

In order to remove the steering wheel 2, the lock sleeve 4 is depressed and the steering wheel 2 and hub 3 is pulled to separate them from the shaft 5.

It will be appreciated by those skilled in the art that several variations to the aforementioned embodiments are envisaged without departing from the scope of the invention. For example, the first spline 54 and/or the first keyway 35 may have the same width, but a different depth and/or a completely different shape or configuration to the second splines 55 and/or second keyway 36. Alternatively, the first spline 54 and/or the first keyway 35 need not be of a different size and configuration to the second splines 55 and/or second keyways 36. Additionally or alternatively, the keys 54, 55, 34 and keyways 35, 36 may be replaced with other spline configurations.

The or each of the hub 3 and/or shaft 5 may include a third spline and/or key and/or keyway, which may have a different size and/or configuration than the first and/or second splines 54, 55 and/or than the first and/or second keyways 35, 36. The angle of the lead-in tapers 34a of the second splines 34 need not be more acute than that of the lead-in portion 56 of the first spline 54.

Additionally or alternatively, the hub 3 need not include a lead-in sleeve 37 and/or the coupling need not include a ball (not shown) and groove 58 arrangement or a lock sleeve 4. It will be appreciated that either of these elements may be omitted or replaced with other equivalent features. Alternatively, the ball (not shown) may be sprung to either the deployed or retracted position or condition.

The coupling may be configured in reverse, e.g. wherein the shaft 5 may include the first keyway 35 and the hub 3 may include the first spline 54. In some embodiments, the shaft 5 may comprise the ball (not shown) and/or the hub 3 may comprise the groove 58.

The assembly 1 may be provided in kit form, for example the shaft 5 of a vehicle may be configured or adapted to receive a hub 3 according to the invention, wherein one or more components, e.g. the steering wheel 2 and/or the hub 3 and/or the lock sleeve 4 may be sold together or separately, either assembled or in kit form.

It will also be appreciated by those skilled in the art that any number of combinations of the aforementioned features and/or those shown in the appended drawings provide clear advantages over the prior art and are therefore within the scope of the invention described herein.

## Claims

1. A releasable coupling comprising a hub and a shaft, the shaft being received or receivable in the hub, one of the hub and shaft having first and second splines, the other of the shaft and the hub having corresponding first and second rebates in which the first and second splines are received or are receivable, the first spline extending to or substantially to a distal end of the said one of the hub and shaft and beyond the second spline.

2. Releasable coupling according to Claim 1, the first spline having a lead-in portion extending beyond the second spline.

3. Releasable coupling according to claim 2, wherein the lead-in portion is tapered.

4. Releasable coupling according to any of claims 1, 2 or 3, wherein the second spline and the first spline each comprise a lead-in taper, the lead-in taper of the second spline comprising a lead-in angle that is more acute than the lead-in angle of the lead-in portion of the first spline.

5. Releasable coupling according to any preceding claim, wherein the said one of the shaft and hub has respectively an outer or inner circumferential perimeter and wherein the first spline is in said circumferential direction larger than said second spline.

6. Releasable coupling according to any preceding claim, wherein the said one of the hub and the shaft comprises a plurality of second splines and the said one of the shaft and hub comprises a plurality of second rebates.

7. Releasable coupling according to claim 6, wherein the plurality of second splines comprise substantially the same shape and/or configuration.

8. Releasable coupling according to any preceding claim, wherein the hub further comprises a lead-in sleeve portion that is free of splines and/or rebates.

9. Releasable coupling according to any preceding claim further comprising a lock means for inhibiting removal of the shaft from the hub, the lock means comprising a sleeve extending around the shaft and hub when said shaft has been received in said hub.

10. A shaft for use with a releasable coupling according to any preceding claim, the shaft comprising first and second splines, wherein the first spline comprises a lead-in portion extending to or towards a distal end of the shaft and configured such that when the shaft is inserted into a hub, in use, the lead-in portion of the first spline is received within the hub prior to the second spline.

11. Shaft according to claim 10, further comprising a plurality of second splines.

12. A steering column shaft according to claim 10 or 11.

13. A steering column comprising a shaft according to any one of claims 10, 11 or 12.

14. A quick release or detachment mechanism for a steering wheel, the mechanism comprising a releasable coupling according to any one of claims 1 to 9.

15. A kit of parts for assembly into a quick release or detachment mechanism according to claim 14, the kit comprising the hub and the shaft and, preferably, locking means to releasably secure the hub to the shaft in use.
